# FASCICULE DE BREVET EUROPEEN

(11) **EP 0 493 587 B1**
(45) Date de publication et mention de la délivrance du brevet: **12.04.1995**
(21) Numéro de dépôt: 91914728.0
(22) Date de dépôt: 22.07.1991
(51) Int. Cl.: C01G 9/02, H01C 7/10

(54) **PROCEDE DE FABRICATION D'UNE POUDRE D'OXYDE DE ZINC DOPE, ET POUDRE OBTENUE**
VERFAHREN ZUR HERSTELLUNG EINES PULVERS AUS DOTIERTEM ZINKOXID UND SO ERHALTENES PULVER
METHOD FOR PRODUCING DOPED ZINC OXIDE POWDER, AND POWDER OBTAINED

(30) Priorité: 24.07.1990 FR 9009789
(43) Date de publication de la demande: 08.07.1992
(73) Titulaire: CENTRE NATIONAL DE LA RECHERCHE SCIENTIFIQUE (CNRS), 75016 Paris (FR)
(72) Inventeur: ROUSSET, Abel, F-31520 Ramonville (FR); ANDRIANJATOVO, Hortense, F-31400 Toulouse (FR); LEGROS, Renée Chemin Latié, F-31320 Castanet-Tolosan (FR)
(74) Mandataire: Cabinet BARRE LAFORGUE & associés
(86) Numéro de dépôt international: FR9100605
(87) Numéro de publication internationale: WO9201631

(56) Documents cités:
- EP-A- 0 272 964
- DD-A- 271 769
- US-A- 4 165 351
- US-A- 4 681 717
- Applied Physics Letters, volume 54, no. 18, 1er mai 1989, American Institute of Physics, (New York, US), T.R.N. Kutty et al.: "Varistors based on polycrystalline ZnO:Cu", pages 1796-1798, voir page 1796, colonne de gauche, paragraphe 2

## Description

L'invention concerne un procédé de fabrication d'une poudre d'oxyde de zinc dopé ; elle s'étend à de nouvelles poudres d'oxyde de zinc dopé ayant des morphologies non obtenues jusqu'à ce jour (texture, taille, forme).

Les poudres d'oxyde de zinc dopé par des éléments métalliques ou semi-métalliques tels que bismuth, cobalt, manganèse, antimoine, étain, aluminium, titane... présentent un intérêt considérable dans l'industrie car elles sont à la base de la fabrication de certains composants électroniques tels que varistances. Le bismuth est un dopant indispensable qui se retrouve dans la grande majorité de ces poudres pour donner aux composants ses propriétés électriques et favoriser l'opération de frittage. Les propriétés électriques des varistances dépendent notamment de la répartition des éléments dopants, de la morphologie des grains et de la composition des joints de grains. Il est donc essentiel pour adapter ces propriétés à l'application envisagée et garantir leur reproductibilité, de pouvoir contrôler la morphologie des grains, la composition des joints et l'uniformité de la répartition des éléments dopants.

De façon traditionnelle les poudres d'oxyde de zinc dopé sont fabriquées en préparant séparément les oxydes des différents éléments en présence (oxyde de zinc, oxyde de bismuth et oxyde de chacun des autres dopants) par calcination du sel ou de l'hydroxyde correspondant, puis en mélangeant ces oxydes par un procédé mécanique (brevets US 4.405.508, US 4.165.351). Toutefois, un tel procédé conduit à un mélange d'oxydes d'homogénéité aléatoire, très difficile à obtenir à l'identique de façon reproductible quelles que soient les précautions prises ; en outre, la réalisation de ce mélange implique un broyage préalable et ce processus ne permet aucun contrôle ni aucun choix de la morphologie des grains en présence (taille, forme, texture) ; au surplus, l'opération de broyage introduit des pollutions inévitables et les produits obtenus sont relativement impurs. Le brevet US 4.540.971 décrit un procédé du type précédent mais dans lequel les oxydes sont préalablement préparés avec une granulométrie contrôlée (submicronique) avant d'être mélangés, ce qui supprime les défauts inhérents au broyage mais laisse subsister l'hétérogénéité du mélange d'oxydes.

Par ailleurs, le brevet US 4.681.717 et le brevet EP 0.272.964 évoquent un procédé de fabrication consistant à réaliser des hydroxydes de zinc et des dopants, à les précipiter ensemble et à les convertir en oxydes par un traitement thermique ; le brevet US indique qu'il est possible de réaliser une étape supplémentaire de transformation des hydroxydes en oxalates avant le traitement thermique. Dans ce procédé c'est donc au niveau des hydroxydes ou des oxalates des divers éléments que le mélange est effectué, avant de le soumettre au traitement thermique conduisant aux oxydes ; toutefois, il semble que ce processus conduise également à un mélange d'oxydes comme le procédé traditionnel ; en effet une publication "A. LAGRANGE et al, préparation par coprécipitation contrôlée de poudres destinées à l'élaboration de varistances à base d'oxyde de zinc, 2ème colloque international sur les composants passifs : matériaux, technologie, mise en oeuvre, Paris, 18-20 Novembre 1987, pages 147-152" développe les mécanismes de précipitation qui se déroulent dans ce procédé américain et montre que l'on obtient des hydroxydes polyphasés (mélange d'hydroxydes) et par voie de conséquence, des mélanges d'oxydes. De plus, le bismuth qui est un élément ayant des propriétés et une taille très différentes des autres dopants (molécule beaucoup plus grosse) doit être traité séparément dans ce procédé américain : après sa préparation, le mélange d'oxydes de zinc dopé est imprégné par une solution de bismuth, puis l'ensemble est calciné. Dans ces conditions, les défauts afférents à la mauvaise homogénéité des poudres obtenues et à l'impossibilité de contrôler leur morphologie subsistent dans ce procédé, en particulier lorsqu'un des éléments de dopage est constitué par du bismuth, ce qui est le cas le plus fréquent. Les mêmes commentaires peuvent être formulés au sujet du brevet DD 271.769 qui vise une technique analogue mais dans laquelle l'hydroxyde est remplacé par du carbonate de zinc.

Ainsi, les procédés de l'art antérieur ne permettent pas de réaliser des poudres d'oxyde de zinc dopé qui soient homogènes à l'égard de tous les éléments en présence et présentent une morphologie contrôlable.

La présente invention se propose de fournir un nouveau procédé de fabrication de poudre qui écarte les défauts des procédés connus. Elle vise à permettre de réaliser des poudres d'oxyde de zinc dopé dont un des dopants soit constitué par du bismuth et qui bénéficie d'une grande homogénéité de composition et de morphologie. Elle vise également à permettre de choisir cette morphologie en fonction de l'application envisagée (taille, forme, texture).

A cet effet, le procédé visé par l'invention consiste (a) à préparer, au moyen d'un solvant constitué par de l'eau, un alcool ou un mélange des deux, une solution d'un sel de zinc soluble dans ledit solvant, (b) à ajouter à ladite solution des éléments de dopage métalliques ou semi-métalliques sous la forme de sels ou d'hydroxydes desdits éléments, en proportion relative minoritaire par rapport au zinc, (c) à préparer une solution aqueuse contenant un agent précipitant avec, le cas échéant, un ou des éléments de dopage métalliques ou semi-métalliques, (d) à mélanger les solutions issues des deux opérations précédentes en vue d'engendrer une précipitation, (e) à séparer le précipité de la phase liquide, (f) et à soumettre ledit précipité à un traitement thermique en présence d'oxygène de façon à produire une décomposition de celui-ci ; le procédé conforme à la présente invention se caractérise en ce que :
(b) l'on ajoute à la solution de sel de zinc, un sel nu un hydroxyde de bismuth et un sel ou un hydroxyde d'au moins un autre élément de dopage,
(c) l'on utilise comme solution d'agent précipitant, une solution contenant des ions carbonate de concentration comprise entre 0,1 et 3 moles par litre en vue d'engendrer la précipitation d'un carbonate mixte monophasé de zinc et de dopants, de formule Zn_{(1-x-y)}Biₓ D_{y} CO₃, dans lequel des atomes de bismuth Bi et des autres dopants D sont substitués à des atomes de zinc Zn,
(f) l'on réalise le traitement thermique du carbonate mixte de zinc dans des conditions appropriées pour obtenir un oxyde mixte de zinc, de bismuth et des autres dopants.

Le terme "substitué" doit être entendu au sens large et recouvre aussi bien une substitution localisée sur un site cristallographique déterminé qu'une insertion dans le réseau cristallin ou qu'une adsorption sur ce réseau.

Ainsi dans l'invention, l'oxyde de zinc dopé est obtenu à partir d'un précurseur constitué par un carbonate mixte, sans qu'il y ait mélange de phases, que ce soit au niveau des sels ou au niveau des oxydes. Dans ce précurseur les éléments (zinc, bismuth et autres éléments dopants) sont combinés à l'échelle atomique et se retrouvent ensuite sous la même forme dans l'oxyde mixte final : on obtient de la sorte une homogénéité parfaite des éléments (homogénéité à l'échelle moléculaire), tant sur le plan de la composition que sur celui de la morphologie. De plus, comme on le verra plus loin, le contrôle des conditions de précipitation du précurseur permet un choix de la morphologie de celui-ci (forme, taille, texture) ; un traitement thermique approprié de ce précurseur permet ensuite de conserver cette morphologie et ainsi d'obtenir la morphologie désirée pour les poudres. Il est à noter que, contrairement à ce qui se passe dans les procédés connus la décomposition du précurseur s'effectue en une seule étape lors de la montée en température, ce qui démontre que ce précurseur est une phase unique mixte et non un mélange de phases comme c'est le cas dans les procédés connus. Il convient de souligner que l'obtention d'un carbonate mixte de zinc, de bismuth et d'autres dopants est totalement inattendue en raison, d'une part, des propriétés de l'ion carbonate (ions généralement non complexants, n'ayant pas de sphère de coordination), d'autre part, des différences de tailles et de propriété des éléments métalliques ou semi-métalliques en présence, et en particulier du bismuth (taille plus de 2 fois plus importante que celle du zinc).

Il est à noter que les dopants sont généralement ajoutés dans la solution de sel de zinc, mais que certains dopants tels que le titane peuvent être ajoutés en même temps que l'agent précipitant.

L'invention s'étend à une poudre d'oxyde de zinc dopé constituée, non pas par un mélange d'oxydes comme c'est le cas des poudres connues, mais par un oxyde mixte de zinc, bismuth et au moins un autre dopant métallique ou semi-métallique ; le caractère mixte de la phase constitutive de ladite poudre est mis en évidence par son diagramme de diffraction aux rayons X, qui possède un seul système de raies coïncidant sensiblement en nombre et en longueur d'onde avec le système de raies du ZnO. Par l'expression "coïncidant sensiblement", on entend un système de raies proche mais présentant un faible décalage et un élargissement des raies dû à la présence des éléments dopants et notamment du bismuth, qui donnent au spectre de l'oxyde mixte un certain caractère spécifique. (Au contraire, les poudres classiques constituées par un mélange d'oxydes ont des diagrammes à plusieurs systèmes de raies qui se superposent : système du ZnO, système du BiO et système de chacun des oxydes des autres dopants).

La description qui suit indique des conditions préférentielles de mise en oeuvre des diverses phases (a), (b), (c), (d), (e), (f) du procédé de l'invention.

### Phase (a)

Pour préparer la solution de sel de zinc, l'on utilise de préférence un chlorure ou un nitrate de zinc. Ces sels sont en effet les plus solubles en phase aqueuse ou alcoolique, faciles à manipuler et disponibles sur le marché à des coûts réduits. Comme on le verra plus loin, selon la morphologie des grains désirée, on choisit une solution aqueuse (grains sphériques ou en forme d'aiguille) ou alcoolique (grains parallélépipédiques). La concentration molaire de cette solution est en pratique ajustée entre 0,1 et 2 moles/litre.

### Phase (b)

De façon analogue et pour les mêmes raisons, les éléments de dopage ajoutés à la solution précédente sont de préférence des nitrates ou des chlorures des éléments métalliques ou semi-métalliques concernés.

Les nitrates ou chlorures desdits éléments dopants sont avantageusement ajoutés à la solution précédente sous la forme d'une solution ionique ou d'une poudre de façon à obtenir une solution de concentration molaire totale en bismuth et autres éléments dopants par rapport au zinc, inférieure à 20%, la concentration de chaque élément dopant étant choisie en fonction du dopage désiré.

### Phase (c)

La solution d'ions carbonate est de préférence une solution de carbonate d'ammonium. Le sel est en effet très soluble dans l'eau et les ions ammonium entraînés dans la phase liquide, s'éliminent très facilement lors de l'étape de séparation.

### Phase (d)

Le mélange de la solution d'ions carbonate issues de la phase (c) avec la solution issue de la phase (b) est effectué dans les conditions stoechiométriques de façon que le nombre d'ions carbonate soit sensiblement égal à la somme des ions métalliques ou semi-métalliques. On assure ainsi une précipitation totale des ions métalliques : la totalité du zinc et des ions métalliques est consommée, et l'on évite qu'un excès de carbonate rende la solution trop basique et nuise à la précipitation du carbonate mixte.

Pour améliorer la cinétique de la réaction de formation du carbonate mixte et permettre une croissance satisfaisante des grains, l'on verse rapidement la solution d'ions carbonate dans la solution issue de l'opération (b) et l'on agite le mélange pendant une durée comprise entre 0,5 et 5 heures.

### Phase (e)

Le précipité de carbonate mixte obtenu à l'issue de la phase (d) est séparé par une filtration, suivie de préférence d'un lavage au moyen d'un liquide de lavage a base d'eau et/ou d'alcool. Ce lavage permet d'éliminer totalement les ions ammonium et chlorures ou nitrates. On a pu constater que le liquide de lavage présente une influence sur la morphologie des grains obtenus ; un lavage à l'eau favorise la formation de grains isotropes de forme sphérique tandis qu'un lavage à l'alcool favorise au contraire l'anisotropie.

### Phase (f)

Le traitement thermique est de préférence mis en oeuvre en chauffant lentement le carbonate mixte avec une vitesse de montée en température au plus égale à 240°/heure, pour amener ledit carbonate à une température de palier comprise entre 260°C et 700°C, le carbonate étant maintenu à cette température pendant une durée comprise entre 1 heure et 8 heures. Ce mode de mise en oeuvre permet de préserver la morphologie cristalline du précurseur au cours de la décomposition et de contrôler ainsi celle de l'oxyde mixte obtenu, tout en conduisant à une décomposition totale du carbonate mixte, qui permet d'obtenir un oxyde pur.

Le procédé de l'invention permet en particulier de fabriquer une poudre d'oxyde mixte de zinc dopé ayant des grains sphériques de diamètre compris entre 1 et 10 microns ; le procédé est alors mis en oeuvre dans les conditions suivantes :
- les solutions (a) et (c) sont des solutions aqueuses,
- la solution (a) est une solution aqueuse de nitrate de zinc ou de chlorure de zinc de concentration molaire comprise entre 0,4 et 0,6 pour le nitrate ou entre 0,05 et 0,2 pour le chlorure,
- après mélange des solutions (a) et (c), l'on agite le mélange à température ambiante pendant une durée comprise entre 0,5 et 1,5 heure avant d'effectuer un lavage à l'eau.

Ces conditions ont été définies par des séries d'expérimentation et conduisent de façon reproductible à la morphologie annoncée.

Le procédé de l'invention permet également de fabriquer une poudre d'oxyde mixte de zinc dopé ayant des grains an forme d'aiguille de longueur comprise entre 1 et 10 »m et de diamètre compris entre 0,3 et 1 »m ; le procédé est alors mis an oeuvre dans les conditions suivantes :
- les solutions (a) et (c) sont des solutions aqueuses,
- la solution (a) est une solution de nitrate de zinc ou de chlorure de zinc de concentration molaire comprise entre 1 et 1,5 pour le nitrate ou entre 0,8 et 1,2 pour la chlorure,
- après mélange des solutions (a) et (c), l'on agite la mélange à chaud à une température comprise entre 60° et 100°C pendant une durée comprise entre 3 et 5 heures avant d'effectuer un lavage au moyen d'un liquide de lavage à base d'alcool contenant au moins 75% d'alcool en volume.

Le procédé de l'invention permet également de fabriquer une poudre d'oxyde mixte de zinc dopé ayant des grains parallélépipédiques dont les côtés ont une dimension comprise entre 1 et 40 »m ; le procédé est a lors mis en oeuvre dans las conditions suivantes :
- la solution (a) est une solution de nitrate ou de chlorure de zinc de concentration molaire comprise entre 0,5 et 2 pour le nitrate ou 0,1 et 0,8 pour le chlorure, ladite solution étant une solution alcoolique contenant en volume au moins 75% d'alcool,
- la solution (c) est une solution aqueuse,
- après mélange des solutions (a) et (c), l'on agite le mélange à température ambiante pendant une durée comprise entre 0,5 et 4 heures avant d'effectuer un lavage au moyen d'un liquide de lavage à base d'alcool contenant au moins 75% d'alcool en volume.

La procédé de l'invention est illustré par les exemples de mises an oeuvre qui suivent, en référence aux dessins annexés ; sur ces dessins :
- les figures 1, 2 et 3 sont des diagrammes obtenus par analyses thermiques différentielles (ATD) respectivement dans la cas du carbonate de zinc pur, du carbonate mixte monophasé fabriqué à l'exemple 1 et d'un mélange de carbonates,
- la figure 4 est une micrographie des grains de carbonate mixte monophasé obtenus à l'exemple 1,
- les figures 5, 6 et 7 sont des diagrammes de diffraction des rayons X respectivement de l'oxyde de zinc pur, de l'oxyde mixte préparé à l'exemple 1 et d'un mélange d'oxydes,
- la figure 8 est une micrographie des grains d'oxyde mixte préparé à l'exemple 1,
- les figures 9 et 10 sont des micrographies des grains d'oxyde mixte préparé respectivement à l'exemple 2 (grains parallélépipédiques) et à l'exemple 3 (grains en forme d'aiguilles).

### EXEMPLE 1: Fabrication d'une poudre d'oxyde de zinc dopé sphérique de composition molaire 90% Zn, 5% Bi, 3% Co, 2% Mn.

a/ - On prépare une solution contenant 500 cm³ d'eau et 66,93 g de Zn(NO₃)₂ 6H₂O ; le pH de cette solution est de l'ordre de 7.
b/ - On ajoute à cette solution 8,93 g de Bi(NO₃)5H₂O, 0,86 g de Co(NO₃)₂ 6H₂O et 0,39 g de Mn Cl₂ 4H₂O.
   L'ensemble de ces composés est dissous dans la solution qui contient globalement 0,5 mole/l de sels.
c/ - Par ailleurs, l'on prépare une solution de 39,45 g de carbonate d'ammonium dans 500 cm³ d'eau, correspondant à 0,5 mole/l.
d/ - L'on mélange les solutions issues de b/ et de c/. L'on observe la formation instantanée d'un précipité. L'on agite le mélange à température ambiante (20°C) pendant 1 heure.
e/ - L'on filtre le précipité et on le lave à l'eau jusqu'à ce que les eaux de lavage ne contiennent plus d'ions chlorure, nitrate ou ammonium.
   On sèche le précipité à l'étuve à 80°C pendant 24 heures, on le désagglomère et on le tamise pour obtenir une poudre homogène.
   Cette poudre est analysée par dosage (spectrométrie et fluorescence X) et par diffraction des rayons X. Le composé formé est un carbonate mixte monophasé de formule :

   Zn_{0,90}Bi_{0,05}CO_{0,03}Mn_{0,02}CO₃

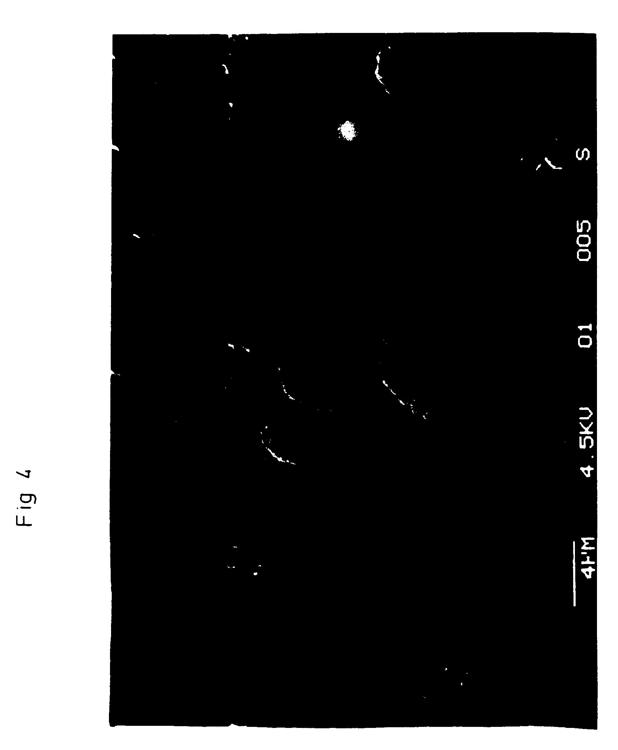

   Le caractère mixte et monophasé de ce composé a été mis an évidence par analyses thermiques différentielles (ATD).

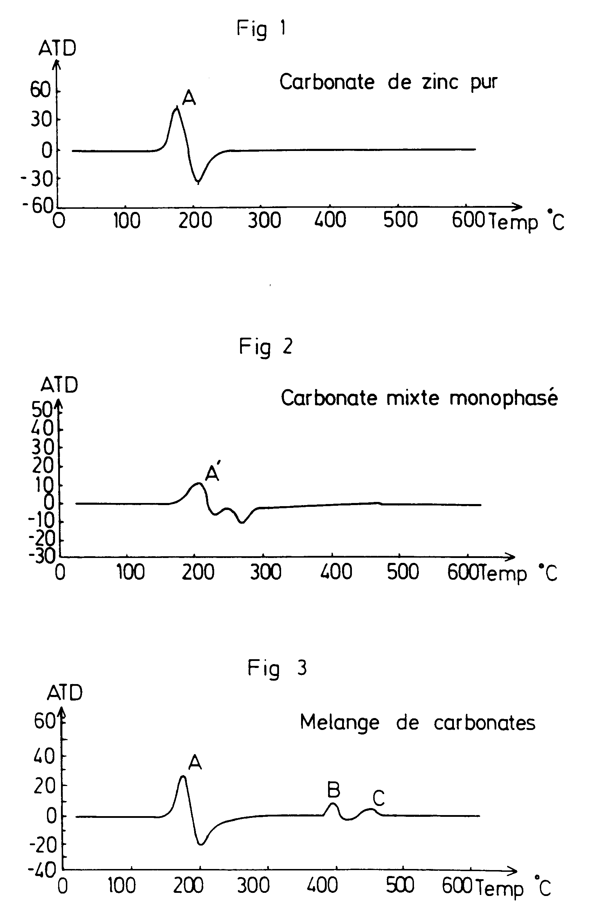

   La figure 1 est un diagramme caractérisant la décomposition thermique du carbonate de zinc pur ; la figure 2 est un diagramme similaire caractérisant la décomposition thermique du carbonate mixte préparé ; la figure 3 est un diagramme similaire caractérisant la décomposition thermique d'un mélange de carbonates : carbonate de zinc, carbonate de bismuth, carbonate de manganèse, carbonate de cobalt (mélange dans lequel les métaux sont présents dans les mêmes proportions que dans le carbonate mixte préparé). En ordonnée est portée la dérivée de la courbe d'analyse thermique différentielle.
   La décomposition du carbonate de zinc pur se traduit par un signal A autour de 200°C (figure 1). Ce signal se retrouve avec une dé formation et un décalage vers les hautes températures dans la décomposition du carbonate mixte (A' : figure 2). Au contraire, la décomposition du mélange de carbonates se traduit par trois signaux, l'un A correspondant au carbonate de zinc vers 200°C, l'autre B correspondant au carbonate de bismuth pur vers 400°C, l'autre C correspondant au carbonate de manganèse pur vers 500°C (le pic correspondant au carbonate de cobalt est trop proche de celui du bismuth pour être apparent).
   La comparaison de ces courbes parmet de caractériser la carbonate mixte monophasé, par opposition à un mélange de carbonates.
   Par ailleurs, les grains du carbonate mixte ont été observés au microscope électronique à balayage et la figure 4 est une micrographie de ces grains qui sont de forme sphérique, monodispersés, de diamètre de l'ordre de 5 à 6 »m.
f/ - La poudre de carbonate mixte obtenue est chauffée à l'air jusqu'à 500°C. La vitesse de montée en température est de 180°/heure, la durée de palier à 500° est de 1 heure et la vitesse de refroidissement est ensuite de 180°/heure.

La poudre obtenue est un oxyde mixte de zinc, bismuth, manganèse et cobalt, qui a été caractérisé par diffraction des rayons X.

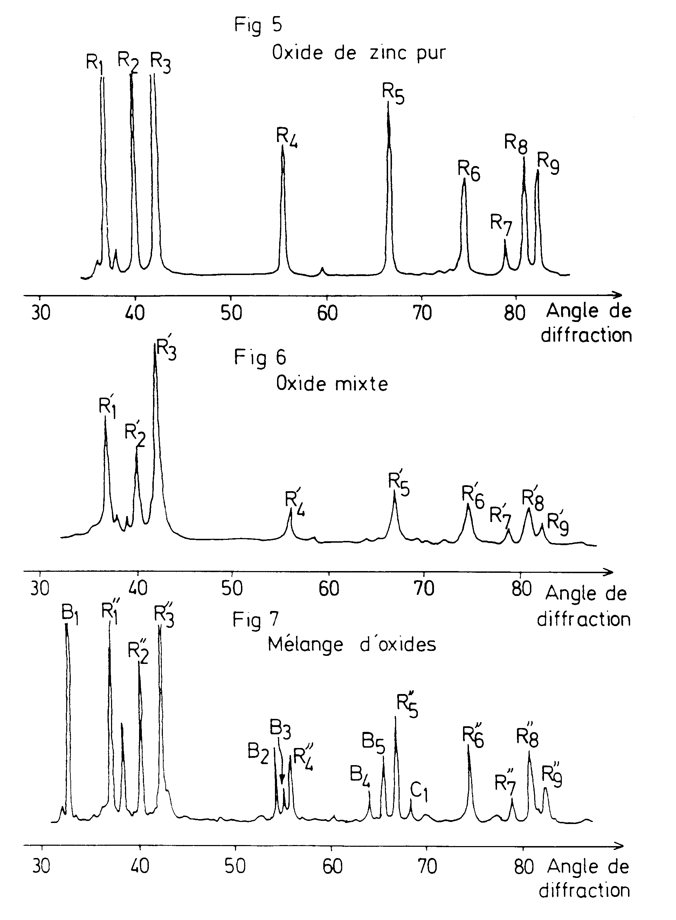

La figure 5 est la diagramme de diffraction des rayons X de l'oxyde de zinc pur (ordonnée : intensité du rayonnement diffracté ; abscisse : angle de diffraction). Ce diagramme se caractérise par la présence de 9 raies principales R₁-R₉ dans le domaine angulaire compris entre 30° et 90°.

La figure 6 est un diagramme analogue pour l'oxyde mixte de zinc préparé. On y retrouve sous une forme proche les 9 raies principales R'₁-R'₉ avec un élargissement dû aux atomes de dopants entrés dans la structure.

La figure 7 est un diagramme analogue pour un mélange d'oxyda de zinc, oxyde de bismuth, oxyde de manganèse et oxyde de cobalt. Outre les raies de l'oxyde de zinc R''₁-R''₉, on observe de façon nette 5 raies caractéristiques de l'oxyde de bismuth B₁-B₅ et, de façon moins nette, une raie C₁ caractéristique de l'oxyde de cobalt (les raies de l'oxyde de manganèse ne sont pas significatives en raison de la faible proportion de ce composé et de ses pics de diffraction proches de ceux de l'oxyde de zinc).

La comparaison de ces diagrammes permet de caractériser l'oxyde de zinc mixte dopé obtenu, par opposition à un mélange d'oxydes.

Par ailleurs, par analyse EDAX, on a montré sur des échantillons de surfaces de quelques nanomètres, que las éléments zinc, bismuth, manganèse et cobalt se trouvaient présents dans les proportions relatives de 0,95, 0,05, 0,03 et 0,02 sur chaque surface élémentaire, ce qui caractérise une dispersion homogène à échelle microscopique.

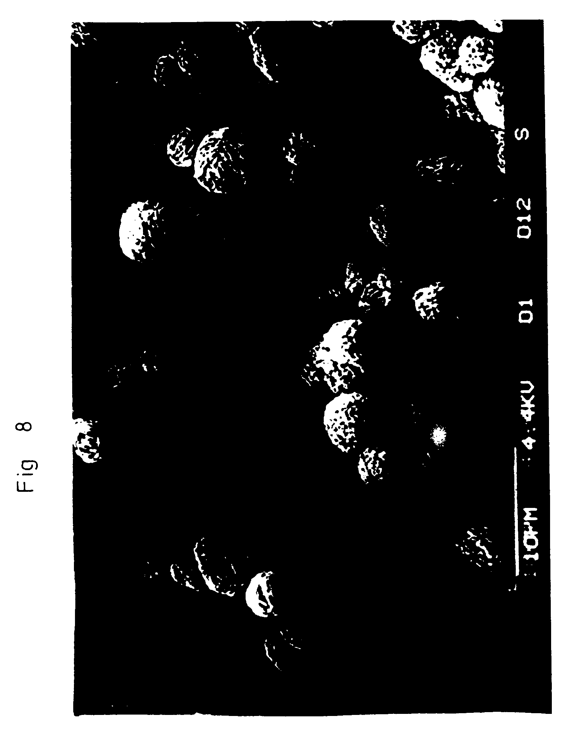

Les grains de l'oxyde mixte ont été observés au microscope électronique à balayage et la figure 8 est une micrographie de cas grains, qui montre que la morphologie sphérique du carbonate a été conservée ainsi que les taillas (5 à 6 »m).

Une telle poudre est particulièrement bien adaptée pour fabriquer des varistances ayant des propriétés électriques précises reproductibles (en raison de la morphologie contrôlée des grains et de la répartition homogène des dopants).

### EXEMPLE 2 : Préparation d'oxyde de zinc dopé de forme parallélépipédique de composition molaire 97% Zn, 1% Bi, 1% CO, 1% Mn.

Dans une solution contenant 200 cm³ de méthanol, on dissout 0,484 g de Bi (NO₃)₃ 5H₂O, 0,288 g de Co (NO₃)₂ 6H₂O, 0,196 g de MnCl₂ 4H₂O et 13,219 g de ZnCl₂ (concentration molaire globale : 0,5 mole/l).

Par ailleurs, on prépare une solution de 15,78 g de carbonate d'ammonium dans 200 cm³ d'eau (concentration molaire : 0,5 mole/l).

On verse la solution de carbonates dans celle de sels. On observa une précipitation instantannée du carbonate de zinc dopé. On agite pendant 3 heures à température ambiante. On filtre et on lave à l'éthanol le précipité obtenu ; on le sèche à l'étuve pendant 24 heures.

Les mêmes analyses que précédemment permettent de caractériser un carbonate mixte monophasé. Au microscope à balayage, on observe des particules de forme parallélépipédique, de 4 à 7 »m de longueur et 1 »m de largeur.

Le traitement thermique est la même que celui effectué à l'exemple 1.

Par rayons X, on retrouve un diagramme à 9 raies, analogue à celui de l'oxyde de zinc pur, significatif du caractère mixte de l'oxyde obtenu.

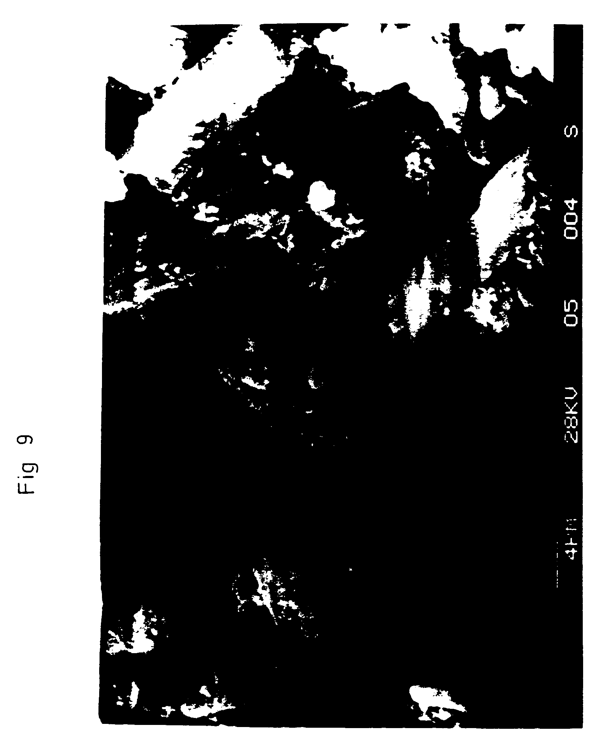

L'observation au microscope électronique à balayage montre qu'une réaction pseudomorphe a eu lieu ; on obtient, an effet, des parallélépipèdes dont las côtés ont des dimensions comprises entre 1 à 7 »m. La figure 9 est une micrographie de ces grains parallélépipédiques.

### EXEMPLE 3 : Préparation d'oxyde de zinc dopé en forme d'aiguilles, de composition molaire 97% Zn, 3% Bi.

Cet exemple a été mise en oeuvre de façon analogue aux précédents dans les conditions suivantes :
- solution de sel de zinc ; solution aqueuse de chlorure de zinc,
- dopant : nitrate de bismuth (solution molaire),
- solution de carbonate : solution aqueuse de carbonate d'ammonium molaire,
- agitation après mélange des solutions, avec chauffage au reflux (100°C) pendant 4 heures,
- lavage à l'éthanol,
- traitement thermique de décomposition identique aux exemples précédents.

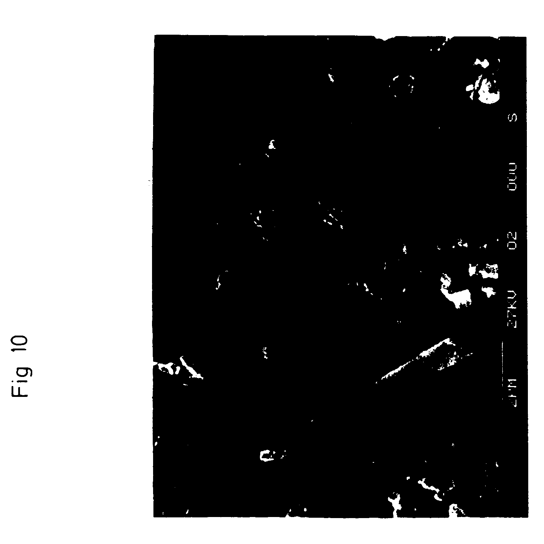

L'oxyde mixte de zinc obtenu se présente sous forme d'aiguilles de 2 à 8 »m de longueur et de 0,3 à 1 »m de diamètre. La figure 10 présente une micrographie du produit, obtenue au microscope électronique.

### EXEMPLE 4

Cet exemple est similaire à l'exemple 1 mais avec modification de la concentration molaire globale de la solution de sels préparée à l'opération b) et de la concentration molaire de la solution de carbonate préparée à l'opération c) :
- concentration molaire de la solution de sels (b) : 0,4,
- concentration molaire de la solution de carbonate (c) : 0,4.

A l'issu du procédé, on constate que les grains sphériques d'oxyde mixte ont des diamètres plus faibles (diamètre moyen : 2 à 3 »m).

## Revendications

1. Procédé de fabrication d'une poudre d'oxyde de zinc dopé, consistant (a) à préparer au moyen d'un solvant constitué par de l'eau, un alcool ou un mélange des deux, une solution d'un sel de zinc soluble dans ledit solvant, (b) à ajouter à ladite solution des éléments de dopage métalliques ou semi-métalliques sous la forme de sels ou d'hydroxydes desdits éléments, en proportion relative minoritaire par rapport au zinc, (c) à préparer une solution aqueuse contenant un agent précipitant, avec le cas échéant un ou des éléments de dopage métalliques ou semi-métalliques, (d) à mélanger les solutions issues des opérations (b) et (c) en vue d'engendrer une précipitation, (e) à séparer le précipité de la phase liquide, (f) et à soumettre ledit précipité à un traitement thermique en présence d'oxygène de façon à produire une décomposition de celui-ci, ledit procédé étant caractérisé en ce que :
(b) l'on ajoute à la solution de sel de zinc, un sel ou un hydroxyde de bismuth et un sel ou un hydroxyde d'au moins un autre élément de dopage,
(c) l'on utilise comme solution d'agent précipitant, une solution contenant des ions carbonate de concentration comprise entre 0,1 et 3 moles par litre en vue d'engendrer la précipitation d'un carbonate mixte monophasé de zinc et de dopants, de formule Zn_{(1-x-y)}Biₓ D_{y} CO₃, dans lequel des atomes de bismuth Bi et des autres dopants D sont substitués à des atomes de zinc Zn,
(f) l'on réalise la traitement thermique du carbonate mixte de zinc dans des conditions appropriées pour obtenir un oxyde mixte de zinc, de bismuth et des autres dopants.

2. Procédé selon la revendication 1, caractérisé en ce que :
(d) le mélange de la solution d'ions carbonate avec la solution issue de l'opération (b) est effectué dans les conditions stoechiométriques de façon que le nombre d'ions carbonates soit sensiblement égal à la somme des ions métalliques ou semi-métalliques.

3. Procédé selon l'une des revendications 1 ou 2, caractérisé en ce que :
(c) l'on utilise comme solution d'ions carbonates une solution de carbonate d'ammonium.

4. Procédé selon l'une des revendications 1, 2 ou 3, caractérisé en ce que :
(d) l'on verse rapidement la solution d'ions carbonates dans la solution issue de l'opération (b) et l'on agite le mélange pendant une durée comprise entre 0,5 et 5 heures.

5. Procédé selon l'une des revendications 1, 2, 3 ou 4, caractérisé en ce que :
(e) l'on sépare le précipité de carbonate mixte par une filtration, suivie d'un lavage au moyen d'un liquide de lavage à base d'eau et/ou d'alcool.

6. Procédé selon l'une des revendications 1, 2, 3, 4 ou 5, caractérisé en ce que :
(f) la traitement thermique consiste à chauffer lentement la carbonate mixte avec une vitesse de montée en température au plus égale à 240°/heure, pour amener ledit carbonate à une température de palier comprise entre 260° C et 700° C, la carbonate étant maintenu à cette température pendant une durée comprise entre 1 heure et 8 heures.

7. Procédé selon l'une des revendications 1 à 6, dans lequel (a) l'on utilise un chlorure ou un nitrate de zinc pour la solution de sel de zinc.

8. Procédé selon la revendication 7, dans lequel (a) l'on prépare une solution aqueuse ou alcoolique de chlorure ou nitrate de zinc de concentration molaire comprise entre 0,1 et 2 moles/litre.

9. Procédé selon l'une des revendications 1 à 8, dans lequel (b) l'on ajoute les éléments de dopage sous la forme de nitrate ou de chlorure desdits éléments.

10. Procédé selon la revendication 9, dans lequel (b) les nitrate ou chlorure des éléments dopants sont ajoutés à la solution issue de l'opération (a) sous la forme d'une solution ionique ou d'une poudre de façon à obtenir une solution de concentration molaire totale en bismuth et autres éléments dopants par rapport au zinc, inférieure à 20 %, la concentration de chaque élément dopant étant choisie en fonction du dopage désiré.

11. Procédé conforme à l'une des revendications 1 à 10 pour la fabrication de poudre d'oxyde mixte de zinc dopé ayant des grains sphériques de diamètre compris entre 1 et 10 »m, caractérisé en ce que :
- les solutions (a) et (c) sont des solutions aqueuses,
- la solution (a) est une solution aqueuse de nitrate de zinc ou de chlorure de zinc de concentration molaire comprise entre 0,4 et 0,6 pour le nitrate ou entre 0,05 et 0,2 pour le chlorure,
- après mélange des solutions (a) et (c), l'on agite le mélange à température ambiante pendant une durée comprise entre 0,5 et 1,5 heure avant d'effectuer un lavage à l'eau.

12. Procédé conforme à l'une des revendications 1 à 10 pour la fabrication de poudre d'oxyde mixte de zinc dopé ayant des grains en forme d'aiguille de longueur comprise entre 1 et 10 »m et de diamètre compris entre 0,3 et 1 »m, caractérisé en ce que :
- les solutions (a) et (c) sont des solutions aqueuses,
- la solution (a) est une solution de nitrate de zinc ou de chlorure de zinc de concentration molaire comprise entre 1 et 1,5 pour la nitrate ou entra 0,8 et 1,2 pour le chlorure,
- après mélange des solutions (a) et (c), l'on agite la mélange à chaud à une température comprise entre 60° et 100°C pendant une durée comprise entre 3 et 5 heures avant d'effectuer un lavage au moyen d'un liquide de lavage à base d'alcool contenant au moins 75 % d'alcool en volume.

13. Procédé conforme à l'une des revendications 1 à 10 pour la fabrication de poudre d'oxyde mixte de zinc dopé ayant des grains parallélépipédiques dont las côtés ont une dimension comprise entre 1 et 40 »m, caractérisé en ce que :
- la solution (a) est une solution de nitrate ou de chlorure de zinc de concentration molaire comprise entre 0,5 et 2 pour le nitrate ou 0,1 et 0,8 pour le chlorure, ladite solution étant une solution alcoolique contenant en volume au moins 75% d'alcool,
- la solution (c) est une solution aqueuse,
- après mélange des solutions (a) et (c), l'on agite le mélange à température ambiante pendant une durée comprise entre 0,5 et 4 heures avant d'effecteur un lavage au moyen d'un liquide de lavage à base d'alcool contenant au moins 75 % d'alcool en volume.

14. Poudre d'oxyde de zinc dopé, caractérisée en ce qu'elle est constituée par un oxyde mixte de zinc, bismuth et au moins un autre dopant métallique ou semi-métallique, ayant dans le diagramme de diffraction aux rayons X un seul système de raies coïncidant sensiblement en nombre et en longueur d'onde avec le système de raies du ZnO.

15. Poudre d'oxyde de zinc dopé conforme à la revendication 14, caractérisée en ce qu'elle est formée de grains sphériques de diamètre compris entre 1 et 10 »m.

16. Poudre d'oxyde de zinc dopé conforme à la revendication 14, caractérisée en ce qu'elle est formée de grains en forme d'aiguille de longueur comprise entre 1 et 10 microns et de diamètre compris entra 0,3 et 1 »m.

17. Poudre d'oxyde de zinc dopé conforme à la revendication 14, caractérisée en ce qu'elle est formée de grains parallélépipédiques dont les côtés ont une longueur comprise entre 1 et 40 »m.

## Claims

1. Method for producing doped zinc-oxide powder, said method consisting (a) in preparing, with the aid of a solvent constituted by water, an alcohol or a mixture of the two, a solution of a zinc salt which is soluble in said solvent, (b) in adding to said solution metallic or semi-metallic doping elements in the form of salts or hydroxides of said elements, the proportion of said elements being smaller than that of the zinc, (c) in preparing an aqueous solution containing a precipitation agent, with, if required, one or several metallic or semi-metallic doping elements, (d) in mixing the solutions resulting from the operations (b) and (c) with a view to bringing about precipitation, (e) in separating the precipitate of the liquid phase, and (f) in subjecting said precipitate to a thermal treatment in the presence of oxygen so as to bring about decomposition of said precipitate, said method being characterised in that:
(b) a salt or a hydroxide of bismuth and a salt or a hydroxide of at least one other doping element is added to the zinc-salt solution,
(c) use is made by way of precipitation-agent solution of a solution containing carbonate ions at a concentration between 0.1 and 3 moles per litre so as to bring about the precipitation of a mixed monophase carbonate of zinc and dopants having the formula Zn_{(1-x-y)}BiₓD_{y}CO₃, in which atoms of bismuth Bi and other dopants D are substituted for atoms of zinc Zn,
(f) the thermal treatment of the mixed zinc carbonate is effected under appropriate conditions so as to produce a mixed oxide of zinc, bismuth and other dopants.

2. Method according to Claim 1, characterised in that:
(d) the mixture of the carbonate-ion solution with the solution resulting from operation (b) is effected under stoichiometric conditions so as to ensure that the number of carbonate ions is substantially equal to the total of metallic or semi-metallic ions.

3. Method according to one of Claims 1 or 2, characterised in that:
(c) by way of carbonate-ion solution use is made of an ammonium carbonate solution.

4. Method according to one of Claims 1, 2 or 3, characterised in that:
(d) the carbonate-ion solution is poured quickly into the solution resulting from operation (b) and the mixture is stirred for a period between 0.5 and 5 hours.

5. Method according to one of Claims 1, 2, 3 or 4, characterised in that:
(e) the mixed carbonate precipitate is separated by filtration followed by washing with the aid of a water- and/or alcohol-based washing liquid.

6. Method according to one of Claims 1, 2, 3, 4 or 5, characterised in that:
(f) the thermal treatment consists in slowly heating the mixed carbonate at a rate of temperature increase amounting at most to 240°/hour so as to bring said carbonate to a constant temperature between 260°C and 700°C, the carbonate being maintained at said temperature for a period between 1 hour and 8 hours.

7. Method according to one of Claims 1 to 6, in which (a) a solution of zinc chloride or zinc nitrate is used by way of zinc-salt solution.

8. Method according to Claim 7, in which (a) an aqueous or alcoholic zinc-chloride or zinc-nitrate solution with a molar concentration between 0.1 and 2 moles/litre is prepared.

9. Method according to one of Claims 1 to 8, in which (b) the doping elements are added in the form of nitrates or chlorides of said elements.

10. Method according to Claim 9, in which (b) the nitrates or chlorides of the doping elements are added to the solution resulting from operation (a) in the form of an ionic solution or a powder so as to obtain a solution in which the total molar concentration of bismuth and other doping elements amounts to less than 20% of the zinc concentration, the concentration of each doping element being selected as a function of the doping effect required.

11. Method according to one of Claims 1 to 10 for manufacturing a powder of mixed doped zinc oxide with spherical grains having a diameter between 1 and 10 »m, characterised in that:
- the solutions (a) and (c) are aqueous solutions,
- the solution (a) is an aqueous solution of zinc nitrate or zinc chloride, with the molar concentration of the nitrate amounting to between 0.4 and 0.6 and the molar concentration of the chloride amounting to between 0.05 and 0.2,
- once the solutions (a) and (c) have been mixed the mixture is stirred at ambient temperature for a period between 0.5 and 1.5 hours before being washed with water.

12. Method according to one of Claims 1 to 10 for manufacturing a powder of mixed doped zinc oxide with grains in the form of needles having a length between 1 and 10 »m and a diameter between 0.3 and 1 »m, characterised in that:
- the solutions (a) and (c) are aqueous solutions,
- the solution (a) is a solution of zinc nitrate or zinc chloride, with the molar concentration of the nitrate amounting to between 1 and 1.5 and the molar concentration of the chloride amounting to between 0.8 and 1.2,
- once the solutions (a) and (c) have been mixed the mixture is stirred in the hot state at a temperature between 60° and 100°C for a period between 3 and 5 hours prior to being washed with the aid of an alcohol-based washing liquid containing not less than 75 % by volume of alcohol.

13. Method according to one of Claims 1 to 10 for producing a powder of mixed doped zinc oxide having parallelepipidic grains, the sides of which measure between 1 and 40 »m, characterised in that:
- the solution (a) is a solution of zinc nitrate or zinc chloride, with the molar concentration of the nitrate amounting to between 0.5 and 2 and the molar concentration of the chloride amounting to between 0.1 and 0.8, said solution being an alcoholic solution containing not less than 75 % by volume of alcohol,
- the solution (c) is an aqueous solution,
- once the solutions (a) and (c) have been mixed the mixture is stirred at ambient temperature for a period between 0.5 and 4 hours prior to being washed with the aid of an alcohol-based washing liquid containing not less 75 % by volume of alcohol.

14. Doped zinc-oxide powder, characterised in that it is constituted by a mixed oxide of zinc, bismuth and at least one other metallic or semi-metallic dopant having in the X-ray diffraction diagram a single line system which in terms of wave number and wave length substantially coincides with the line system for ZnO.

15. Doped zinc-oxide powder according to Claim 14, characterised in that it consists of spherical grains with a diameter between 1 and 10 »m.

16. Doped zinc-oxide powder according to Claim 14, characterised in that it consists of grains in the form of needles with a length between 1 and 10 »m and with a diameter between 0.3 and 1 »m.

17. Doped zinc-oxide powder according to Claim 14, characterised in that it consists of parallelepipedic grains, the sides of which have a length between 1 and 40 »m.

## Patentansprüche

1. Verfahren zur Herstellung eines Pulvers aus dotiertem Zinkoxid, bestehend (a) in der Zubereitung mit Hilfe eines aus Wasser, einem Alkohol oder einem Gemisch der beiden bestehenden Lösungsmittels einer in dem besagten Lösungsmittel löslichen Zinksalzlösung, (b) im Zusetzen zu der besagten Lösung von metallischen oder halbmetallischen Dotierelementen in der Form von Salzen bzw. Hydroxiden der besagten Elemente, wobei deren Anteil im Verhältnis zu dem des Zinks geringer ist, (c) im Zubereiten einer ein Fällmittel enthaltenden wässerigen Lösung, die ggf. metallische oder halbmetallische Dotierelemente enthält, (d) im Mischen der durch die Operationen (b) und (c) gewonnenen Lösungen, um Fällung zu bewirken, (e) im Trennen des Niederschlags von der flüssigen Phase und (f) im Unterziehen des besagten Niederschlags einer Wärmebehandlung in Gegenwart von Sauerstoff, um Zersetzung des besagten Niederschlags zu bewirken, wobei das besagte Verfahren dadurch gekennzeichnet ist, daß
(b) der Zinksalzlösung ein Salz bzw. Hydroxid von Wismut und ein Salz bzw. Hydroxid von mindestens einem anderen Dotierelement zugesetzt wird,
(c) als Fällmittellösung von einer Carbonationen enthaltenden Lösung mit einer Konzentration zwischen 0,1 und 3 Mol pro Liter Gebrauch gemacht wird, um die Fällung eines gemischten einphasigen Zink- und Dotierelementcarbonats der Formel Zn_{(1-x-y)}BiₓD_{y}CO₃ zu bewirken, in dem die Wismutatome Bi und die Atome der anderen Dotierelemente D anstelle der Zinkatome Zn treten,
(f) die Wärmebehandlung des gemischten Zinkcarbonats unter Bedingungen durchgeführt wird, die zur Erzielung eines gemischten Oxids von Zink, Wismut und anderen Dotierelementen geeignet sind.

2. Verfahren nach Anspruch 1, dadurch gekennzeichnet, daß
(d) das Maschen der Carbonationenlösung mit der durch die Operation (b) gewonnenen Lösung unter stöchiometrischen Bedingungen bewirkt wird, so daß die Anzahl der Carbonationen im wesentlichen der Summe der metallischen bzw. halbmetallischen Ionen gleich ist.

3. Verfahren nach einem der Ansprüche 1 oder 2, dadurch gekennzeichnet, daß
(c) von einer Ammoniumcarbonatlösung als Carbonationenlösung Gebrauch gemacht wird.

4. Verfahren nach einem der Ansprüche 1, 2 oder 3, dadurch gekennzeichnet, daß
(d) die Carbonationenlösung schnell in die durch Operation (b) gewonnene Lösung geschüttet und das Gemisch während einer Zeitspanne zwischen 0,5 und 5 Stunden gerührt wird.

5. Verfahren nach einem der Ansprüche 1, 2, 3 oder 4, dadurch gekennzeichnet, daß
(e) der Niederschlag von gemischtem Carbonat durch eine Filterung getrennt wird, worauf er mit Hilfe einer auf Wasser und/oder Alkohol basierenden Waschflüssigkeit gewaschen wird.

6. Verfahren nach einem der Ansprüche 1, 2, 3, 4 oder 5, dadurch gekennzeichnet, daß
(f) die Wärmebehandlung darin besteht, daß das gemischte Carbonat langsam bei einer Temperaturanstiegsgeschwindigkeit, die höchstens 240°/Stunde beträgt, erhitzt wird, um die Temperatur des Carbonats auf einen konstanten Wert zwischen 260°C und 700°C zu bringen, wobei diese Temperatur des Carbonats während einer Zeitspanne zwischen 1 Stunde und 8 Stunden beibehalten wird.

7. Verfahren nach einem der Ansprüche 1 bis 6, bei dem (a) als Zinksalzlösung von einem Zinkchlorid bzw. - nitrat Gebrauch gemacht wird.

8. Verfahren nach Anspruch 7, bei dem (a) eine wässerige oder alkoholische Lösung von Zinkchlorid oder - nitrat zubereitet wird, deren molare Konzentration zwischen 0,1 und 2 Mol/Liter beträgt.

9. Verfahren nach einem der Ansprüche 1 bis 8, bei dem (b) die Dotierelemente in der Form von Nitraten bzw. Chloriden der besagten Elemente zugesetzt werden.

10. Verfahren nach Anspruch 9, bei dem (b) die Nitrate bzw. Chloride der Dotierelemente der durch Operation (a) gewonnenen Lösung in der Form einer ionischen Lösung oder eines Pulvers zugesetzt werden, um eine Lösung zu erzielen, bei der die molare Gesamtkonzentration des Wismuts und der anderen Dotierelemente weniger als 20 % der Zinkkonzentration ausmacht, und zwar wird die Konzentration jedes Dotierelements in Abhängigkeit von der gewünschten Dotierwirkung gewählt.

11. Verfahren nach einem der Ansprüche 1 bis 10 zur Herstellung eines Pulvers aus gemischtem dotiertem Zinkoxid mit kugelförmigen Körnern, deren Durchmesser zwischen 1 und 10 »m beträgt, dadurch gekennzeichnet, daß
- die Lösungen (a) und (c) wässerige Lösungen sind,
- die Lösung (a) eine wässerige Zinknitrat- bzw. Zinkchloridlösung ist, wobei die Molarkonzentration des Nitrats zwischen 0,4 und 0,6 und die Molarkonzentration des Chlorids zwischen 0,05 und 0,2 beträgt,
- nach dem Mischen der Lösungen (a) und (c) das Gemisch vor dem Waschen mit Wasser während einer Zeitspanne zwischen 0,5 und 1,5 Stunde bei Umgebungstemperatur gerührt wird.

12. Verfahren nach einem der Ansprüche 1 bis 10 zur Herstellung eines Pulvers aus gemischtem dotiertem Zinkoxid mit Körnern in der Form von Nadeln, deren Länge zwischen 1 und 10 »m und deren Durchmesser zwischen 0,3 und 1 »m beträgt, dadurch gekennzeichnet, daß
- die Lösungen (a) und (c) wässerige Lösungen sind,
- die Lösung (a) eine Zinknitrat- bzw. Zinkchloridlösung ist, wobei die Molarkonzentration des Nitrats zwischen 1 und 1,5 und die Molarkonzentration des Chlorids zwischen 0,8 und 1,2 beträgt,
- nach dem Mischen der Lösungen (a) und (c) das Gemisch vor dem Waschen mit einer auf Alkohol basierenden Waschflüssigkeit, die mindestens 75 % Alkohol nach Volumen enthält, im heißen Zustand bei einer Temperatur zwischen 60° und 100°C während einer Zeitspanne zwischen 3 und 5 Stunden gerührt wird.

13. Verfahren nach einem der Ansprüche 1 bis 10 zur Herstellung eines Pulvers aus gemischtem dotiertem Zinkoxid mit parallelepipedischen Körnern, deren Seitenmaß zwischen 1 und 40 »m beträgt, dadurch gekennzeichnet, daß
- die Lösung (a) eine Zinknitrat- bzw. Zinkchloridlösung ist, wobei die Molarkonzentration des Nitrats zwischen 0,5 und 2 beträgt und die Molarkonzentration des Chlorids zwischen 0,1 und 0,8 beträgt, und zwar ist die besagte Lösung eine alkoholische Lösung mit mindestens 75 % Alkohol nach Volumen,
- die Lösung (c) eine wässerige Lösung ist,
- nach dem Mischen der Lösungen (a) und (c) das Gemisch vor dem Waschen mit einer auf Alkohol basierenden Waschflüssigkeit, die mindestens 75 % Alkohol nach Volumen enthält, während einer Zeitspanne zwischen 0,5 und 4 Stunden bei Umgebungstemperatur gerührt wird.

14. Pulver aus dotiertem Zinkoxid, dadurch gekennzeichnet, daß es aus einem gemischten Oxid von Zink, Wismut und mindestens einem anderen metallischen oder halbmetallischen Dotierelement besteht, mit einem einzigen Liniensystem in dem Röntgenstrahlenbeugungsdiagramm, das hinsichtlich der Wellenzahl und der Wellenlänge im wesentlichen mit dem Liniensystem des ZnO übereinstimmt.

15. Pulver aus dotiertem Zinkoxid nach Anspruch 14, dadurch gekennzeichnet, daß es aus kugelförmigen Körnern mit einem Durchmesser zwischen 1 und 10 »m besteht.

16. Pulver aus dotiertem Zinkoxid nach Anspruch 14, dadurch gekennzeichnet, daß es aus Körnern in der Form von Nadeln mit einer Länge zwischen 1 und 10 »m und einem Durchmesser zwischen 0,3 und 1 »m besteht.

17. Pulver aus dotiertem Zinkoxid nach Anspruch 14, dadurch gekennzeichnet, daß es aus parallelepipedischen Körnern besteht, deren Seitenlängen zwischen 1 und 40 »m betragen.
